# EUROPEAN PATENT SPECIFICATION

(11) **EP 3 571 583 B1**
(45) Date of publication and mention of the grant of the patent: **26.01.2022**
(21) Application number: 18754016.6
(22) Date of filing: 07.02.2018
(51) Int. Cl.: G06F 12/02

(54) **SYSTEM AND METHOD TO REDUCE OVERHEAD OF REFERENCE COUNTING**
SYSTEM UND VERFAHREN ZUR VERRINGERUNG VON OVERHEAD EINER REFERENZZÄHLUNG
SYSTÈME ET PROCÉDÉ POUR RÉDUIRE LE SURDÉBIT DE COMPTAGE DE RÉFÉRENCE

(30) Priority: 16.02.2017 US 201715434270
(43) Date of publication of application: 27.11.2019
(73) Proprietor: Huawei Technologies Co., Ltd., Longgang District Shenzhen, Guangdong 518129 (CN)
(72) Inventor: WANG, Haichuan, Plano TX 75024 (US); MA, Lin, Plano TX 75024 (US); ZHENG, Ruohuang, Plano TX 75024 (US); YANG, Xuejun, Plano TX 75024 (US)
(74) Representative: Maiwald Patent- und Rechtsanwaltsgesellschaft mbH
(86) International application number: PCT/CN2018/075613
(87) International publication number: WO 2018/149347

(56) References cited:
- CN-A- 104 123 193
- CN-A- 104 834 506
- CN-A- 105 190 565
- JP-A- H0 214 354
- US-A- 6 119 115
- US-A1- 2004 255 087
- US-A1- 2007 067 573
- US-A1- 2011 246 727
- US-A1- 2011 246 727
- US-A1- 2016 291 880
- US-B1- 6 993 770

## Description

### BACKGROUND

Memory management systems typically keep track of memory objects after they are created and delete those objects when they are no longer needed so that the memory being used becomes available again. These systems, also known as garbage collectors, often work by maintaining a reference count that is associated with each memory object. For example, a reference count is used to keep track of objects being created or allocated, and subsequently removed, in memory. The reference count is incremented when a thread (or process or other entity) accesses or otherwise references that memory object. The reference count is decremented when the thread deletes or removes the memory object. When the reference count reaches zero, the memory object is assumed to no longer be in use and the memory manager may free the memory for re-use to thereby reduce the possibility of running out of memory.

Additionally, computing systems often have multiple processors over which a given workload may be distributed to increase computational throughput. Each processor may have an associated memory that operates at a higher speed than the main memory. When multiple threads are executing on different processors and accessing, or sharing, a common memory object, the reference count for that object will typically need to be transferred from one memory to another, which may result in increased latencies and reduced processing efficiency. As the computing system increases in size with a greater number of threads executing in parallel, the memory management may result in an increased number of reference counting instructions being issued, along with a decrease in overall system performance.

The US 2011 / 0246727 A1 refers to a system and a method for tracking references to shared objects using byte-addressable per-thread reference counters. This document also discloses an unslotted reference counter, the value of which reflects the number of unslotted threads that are referencing a shared data object.

### BRIEF SUMMARY

The invention is set out in the appended set of claims. The dependent claims set out particular embodiments. In a first embodiment, according to the invention, there is a device for reference counting, comprising a non-transitory memory storage comprising instructions; and one or more processors in communication with the memory, wherein the one or more processors execute the instructions to perform operations comprising: establishing a global reference counter associated with a lock to count one or more threads of a process referencing an object allocated in the memory; tracking, by each of the threads, each reference to the object by the thread using a corresponding local reference counter; and updating the global reference counter whenever a reference to the object by each of the one or more threads is and initial reference to the object or final reference to the object.

In a second embodiment according to the first embodiment, wherein tracking, by a first thread, a reference to the object by the first thread using a corresponding local reference counter comprises determining whether the reference by the thread is an initial reference to the object; in response to determining that reference to the object is the initial reference to the object: the updating comprising increasing the global reference counter and initializing the local reference counter with a zero value; and increasing the local reference counter without locking the local reference counter.

In a third embodiment according to any one of the first through second embodiments, wherein tracking, by a first thread, a reference to the object by the first thread using a corresponding local reference counter comprises decreasing the local reference counter without locking the local reference counter; determining whether the local reference counter has a zero value; in response to determining that the local reference counter has a zero value, the updating comprising decreasing the global reference counter; and releasing the object from the memory when the global reference counter is updated to a zero value.

In a fourth embodiment according to any one of the first through third embodiments, a first of the one or more threads corresponds to a first local reference counter and second of the one or more threads corresponds to a second local reference counter, wherein the operations further comprise increasing the first local reference counter when the first thread references the object and decreasing the first local reference counter when the first thread no longer references the object; increasing the second local reference counter when the second thread references the object and decreasing the second local reference counter when the second thread no longer references the object; and releasing the object from the memory and the lock associated with the global reference counter when the first local counter and the second local counter have a zero value.

In a fifth embodiment according to any one of the first through fourth embodiments, the corresponding local reference counter employs a lock-free reference count.

In a sixth embodiment according to any one of the first through fifth embodiments, the global reference counter has a count value equal to a number of references by the one or more threads to the object in the memory.

In a seventh embodiment according to any one of the first through sixth embodiments, wherein the operations further comprise updating a layout of the object to include the global reference counter; and mapping an address of the object to a local address of each of the first and second corresponding local reference counters.

In an eighth embodiment according to any one of the first through seventh embodiments, , wherein mapping an address of the object to a local address of each of the first and second local reference counters comprises one of (1) mapping the shared object address to addresses of the first and second local reference counters by changing associated page addresses, (2) using a hashmap to store a mapping of an address of the object to a local address of the associated reference counter, and (3) employing the first and second local reference counters when satisfying an activity level threshold for the one or more threads.

In a ninth embodiment according to any one of the first through eighth embodiments, the lock is retrieved from a lock manager and is coupled to a distributed data store to lock access to the object, grant a lock to the process for the object stored in the memory, and prevent other processes from accessing the object while locked.

In a tenth embodiment according to any one of the first through ninth embodiments, the object is a class instance of a programming language.

In an eleventh embodiment there is a computer-implemented method for reference counting, comprising establishing a global reference counter associated with a lock to count one or more threads of a process referencing an object allocated in the memory; tracking, by each of the threads, each reference to the object by the thread using a corresponding local reference counter; and updating the global reference counter whenever a reference to the object by each of the one or more threads is an initial reference to the object or a final reference to the object.

In a twelfth embodiment there is a non-transitory computer-readable medium storing computer instructions for accessing cloud-based phone services over a distributed network by a remote device, that when executed by one or more processors, perform the steps of establishing a global reference counter associated with a lock to count one or more threads of a process referencing an object allocated in the memory; tracking, by each of the threads, each reference to the object by the thread using a corresponding local reference counter; and updating the global reference counter whenever a reference to the object by each of the one or more threads is and initial reference to the object or final reference to the object.

### BRIEF DESCRIPTION OF THE DRAWINGS

Aspects of the present disclosure are illustrated by way of example and are not limited by the accompanying figures for which like references indicate elements.
FIG. 1 illustrates an example of a distributed data system according to one embodiment.
FIGS. 2A and 2B illustrate an example of threads referencing data in a memory management system in accordance with conventional methods.
FIGS. 3A and 3B illustrate an example of threads referencing data in a memory management system in accordance with an embodiment of the disclosure.
FIG. 4 illustrates example object layouts in accordance with various embodiments of the disclosure.
FIG. 5A illustrates a flow diagram of reference counting in accordance with FIGS. 1, 3A, 3B and 4.
FIG. 5B is an example flow diagram of reference counting in accordance with FIG. 5A.
FIG. 6A illustrates one embodiment of a flow diagram for a local reference counter in accordance with FIGS. 5A and 5B.
FIG. 6B illustrates another embodiment of a flow diagram for a local reference counter in accordance with FIGS. 5A and 5B.
FIG. 7 illustrates a block diagram of a network system that can be used to implement various embodiments.

### DETAILED DESCRIPTION

The disclosure relates to technology for memory management using reference counters.

Reference counters have long been used in memory management to track the number of threads referencing (pointing to) data (an object) stored in memory. As described above, as the number of threads in a computing system increase, the memory management may result in an increased number of reference counting instructions being issued (increased overhead), along with a decrease in overall system performance.

To ensure that an object being referenced by one thread is not accessed by another thread at the same time, a locking mechanism (e.g., a semaphore) is often introduced to prevent access to the referenced object. When an object is referenced, the locking mechanism is implemented by an instruction from the system. With each instruction to lock a referenced object, additional overhead is introduced into the system.

In the invention, to reduce overall number of instructions and increase system performance, a global reference counter and one or more local reference counters is introduced. The global reference counter is responsible for maintain a global reference count that tracks the number of threads referencing an object. Each of the one or more local reference counters is associated with one or more threads and tracks the number of references being made to the object by the associated thread. When a reference by the thread is a first or last reference, the global reference counter is updated. Otherwise, the local reference counter is updated to reflect the reference (or exit of a reference) of the associated local thread.

In the invention, the global reference counter is implemented with a lock and the local reference counters are implemented in a lock-free manner. That is, updating the value of a local reference counter does not require the local reference counter to be locked in order for the update to occur.

Various processing languages, such as Python, offer automatic reference counting or garage collection, in which memory is automatically freed when no longer in use. A general method for garbage collection in these types of languages is for the system to periodically perform a check of all objects to determine whether each object is still being referenced by thread or process. If an object is still being referenced, the object remains untouched. If, on the other hand, the object is no longer being referenced (e.g., no thread is currently referencing the object), then the system releases the object. This periodic checking behavior introduces heavy system overhead at unpredictable intervals and is therefore not an ideal solution, especially in performance sensitive environments.

Other processing languages, such as C and C++, do not typically offer automatic garbage collection, but do afford a manual mechanism in which to reference count. In these environments, object release from the memory is explicitly managed by the programmer. Reference counting provides a relatively simple garbage collection mechanism that has a constant incremental overhead. According to such a reference counting mechanism, an indicator (e.g., a counter) of some type is used to determine whether an object is being processed. While reference is being made to the object, the indicator informs the system that the object is being processed and should not be released, whereas no reference being made to the object informs the system that the object is no longer being processed and may be released.

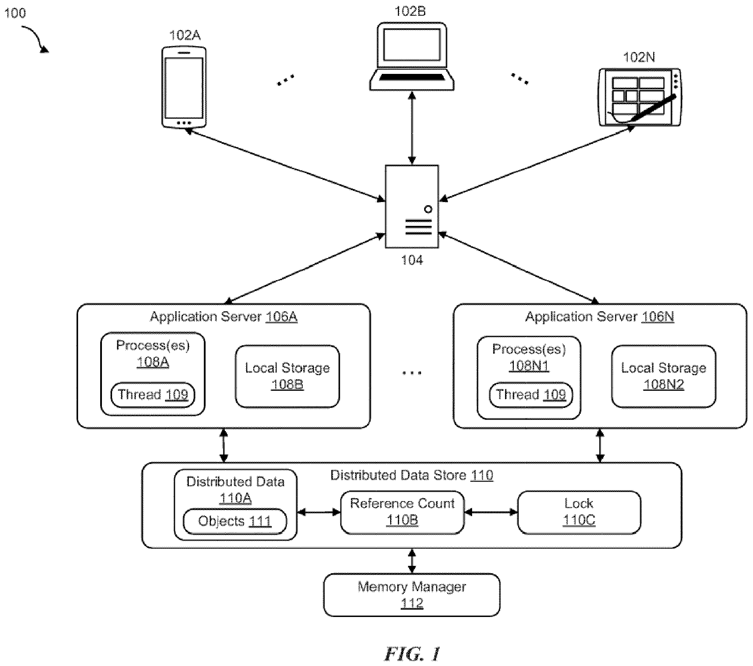

FIG. 1 illustrates an example of a distributed data system according to one embodiment. The distributed data system 100 includes, for example, client devices (or nodes) 102A - 102N, server 104, application servers 106A - 106N, distributed data store 110 and memory manager 112. In one embodiment, the distributed data system is a memory management system.

Clients 102A - 102N may be, but are not limited to, devices such as desktop personal computers, laptops, PDAs, tablets, smartphones, point-of-sale terminals, etc. that may execute client applications, such as web browsers.

The server 104 may include one or more servers, such as an enterprise server (e.g., web server), that provide content to the clients 102A - 102N via a network (not shown). The network may be a wired or wireless network or a combination thereof, and may include a LAN, WAN, Internet, or a combination thereof. Any of a variety of one or more networking protocols may be used in the network, for example, TCP/IP.

Application servers 106A - 106N, which facilitate creation of web applications and an environment to execute the web applications, may include processes (or applications) 108A - 108N1 and local storage 108B - 108N2, respectively. In one example, the processes 108A - 108N1 may be used by the clients 102A - 102N to apply logic to distributed data stored in local storage 108B - 108N2, respectively. Processes 108A - 108N1 may include one or more threads 109.

Threads 109 (or code modules) execute on the multiple cores of application servers 106A - 106N and may be configured to enter a transaction when accessing objects 111 in memory. During the transaction, the threads 109 may perform an access of the reference count 110B associated with the object 111.

Local storage 108B may, for example, include local instances of data or objects of the distributed data maintained by the application servers 106A - 106N, for example, for use by local clients of the application servers 106A - 106N or by processes 108A - 108N1 executing within the application servers 106A - 106N.

Distributed data store 110 includes, for example, data structure 110A, reference count 110B and lock 110C. The distributed data store 110 may store data including one or more instances of distributed data 110A, where distributed data 110A may include an instance of the distributed data that is accessible by the application servers 106A - 106N. In one embodiment, distributed data 110A may be distributed on the distributed data system across one or more computer-accessible mediums. In another embodiment, distributed data store 110 may include storage on one or more computer systems that also host one or more of application servers 106A - 106N.

In one embodiment, the processes 108A - 108N1 may provide data and/or services to enterprise server 104, for example, for use by the clients 102A - 102N. The application servers 106A - 106N may send updates of distributed data to distributed data store 110 in response to an event, such as a modification of one or more attributes of the local data in local storages 108A 0 108N, and/or as routine maintenance to synchronize the distributed data with the local data. In one embodiment, an attribute may be a portion or element of the distributed data, and may be one of any of various types of data that may be used in a process such as programming language objects or classes (e.g., Java objects or classes), strings, integers, Booleans, characters, real number representations, or any other type of computer-representable data.

Distributed data store 110 may also include a lock 110C, in which the lock 110C may grant or deny access to processes 108A - 108N1 for one or more portions of the distributed data 110A. Thus, when one of the processes 108A - 108N1 locks one or more portions of the distributed data 110A, other processes 108A - 108N1 may not access that portion. At the same time, however, other processes 108A - 108N1 may lock other portions of the distributed data 110A.

In one embodiment, a process 106A - 106N may hold one or more locks, with each lock 110C corresponding to one or more portions of distributed data 110A. A thread 109 of a multithreaded process 106A - 106N may request a lock 110C for a portion of the distributed data 110A for the processing. In one embodiment, the lock 110C is implemented with a locking mechanism (not shown) that may grant the lock to the thread for processing.

In one embodiment, to access distributed data 110A, one of processes 108A - 108N1 executing within an application server 104 may request a lock 110C, such as a mutex, for a portion of distributed data 110A. If another of the processes108A - 108N1 does not currently hold the lock 110C for the same portion of distributed data 110A, the lock 110C may be issued to the requesting process 108A or 108N1. If another process holds the lock 110C for the requested portion of distributed data 110A, the requesting process 108A or 108N1 may enter a wait state or may continue executing another task while waiting for the lock 110C to be released.

Memory manager 112 is configured to track objects in memory after they are created and delete those objects when they are no longer needed so that the memory may be freed for reallocation. This may be accomplished by maintaining a reference count for each object allocated in memory. The reference count is incremented when a thread (code module, process or other entity) accesses or otherwise references the object in memory. The reference count is decremented when the thread no longer references the object in memory. When the reference count reaches zero, or some threshold value, the memory object may be assumed to no longer be in use and the memory manager can delete the object and free the memory associated with that object.

It is appreciated that the above described locking and protection mechanisms are non-limiting examples, and that any number of well-known locking techniques may be employed.

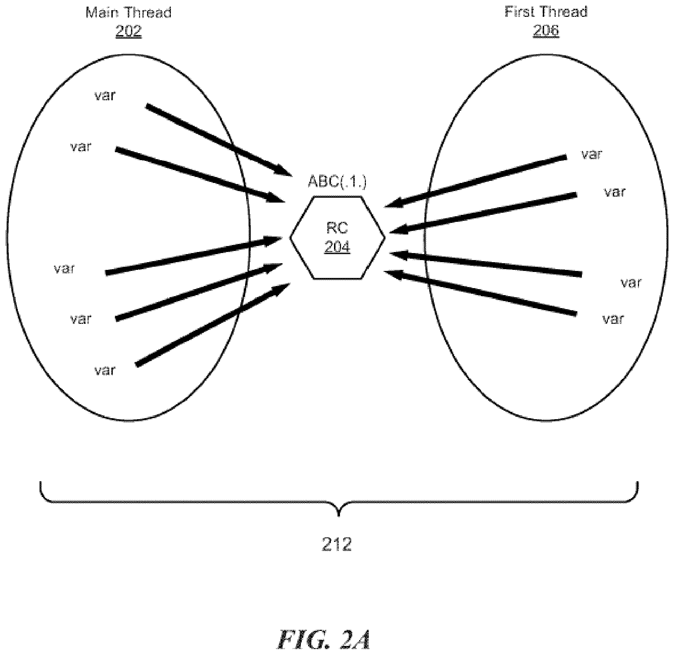

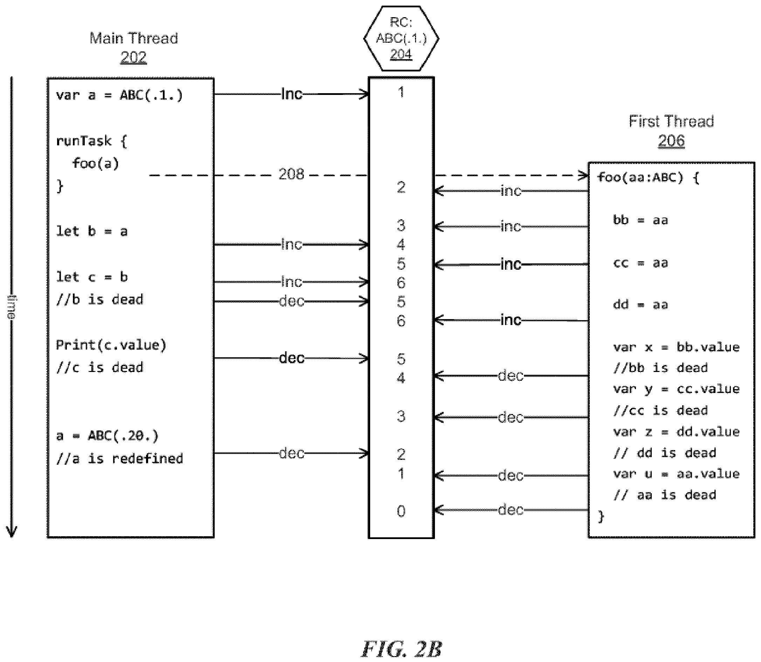

FIGS. 2A and 2B illustrate an example of threads referencing data in a memory management system in accordance with conventional methods. In particular, FIG. 2A depicts an overview of two threads of a process referencing data stored in memory of the memory management system 212. Each of the threads (main thread 202 and first thread 206) have variables that reference (or point to) data that is allocated to a particular space in memory and for which reference counter (RC) 204 tracks the number of references being made. References from a thread variable to the data stored in memory (and the associated reference counter 204) are demonstrated by the darkened arrows.

In one embodiment, the data is an object ABC(.1.) being shared by main thread 202 and first thread 206. In another embodiment, the object ABC(.1.) allocated to memory provides the functionality to maintain a reference count (a count value) using the reference counter 204. Where more than one thread 202 and 206 of the process references the object (e.g., the same or shared object) ABC(.1.), as in the depicted example, it is commonly referred to as a multithreaded process. It is appreciated, for simplicity of the discussion, that only two threads of a process and a single object and associated reference counter are being illustrated. However, any number of processes, threads, objects and/or reference counters may be employed.

To ensure that the reference counter 204 is properly updated during access by a thread 202 and 206, a locking mechanism is employed to protect the reference counter 204 during a counter update (i.e., an increase or decrease to the count value). Implementation of a locking mechanism, in which a lock (e.g., a semaphore) is employed, is particularly useful where threads 202 and 206 of a multithreaded process request access to the same (shared) object ABC(.1.).

In one such embodiment of a locking mechanism, a thread accessing the object ABC(.1.) provides a lock instruction, which notifies other threads (threads other than 202 and 206) that the object ABC(.1.) is in use and should not be accessed. Some types of locks allow shared objects ABC(.1.) to be shared by many processes concurrently (e.g. a shared lock), while other types of locks prevent any type of lock from being granted on the same object ABC(.1.). It is appreciated that any time of well-known lock may be used, and that the disclosure is not limited to the described locking mechanisms.

Without a locking mechanism, the reference counter 204 may be updated by one thread 202 when another thread 206 is already processing the object ABC(.1.). In one example, failure to implement a lock results in a reference counter 204 update occurring in which the referenced object ABC(.1.) is prematurely released from memory while a thread is still processing the object ABC(.1.). In another example, the referenced object ABC(.1.) may not be released from memory after a thread has completed processing of the object ABC(.1.). In the former case, data processing may not be completed prior to release of the object ABC(.1.), whereas, in the latter case, the object ABC(.1.) continues to utilize space in memory even though data processing has been completed. Thus, application of the locking mechanism is imperative to ensure successful processing.

FIG. 2B illustrates an example of a multithreaded process in which main thread 202 and first thread 206 reference data (e.g., object ABC(.1.)) allocated in memory. Each reference to the object by a thread causes the reference counter 204 to be updated (e.g., increased or decreased). For example, when main thread 202 references the object ABC(.1.), the object ABC(.1.) is accessed from memory and a processing entity, such as application server 106A or 106N (FIG. 1), operates on the object ABC(.1.). To prevent other threads from accessing the same object ABC(.1.) at the same time, the afore-mentioned locking mechanism may be employed.

In the example, main thread 202 includes variables (var) 'a,' 'b' and 'c,' each of which reference (point to) the object ABC(. 1.). As a variable references the object ABC(.1.), the reference counter 204 is increased (inc). As a variable goes out of scope (e.g., the variable is implicitly or explicitly de-allocated, or is no longer referenced by any other variable in subsequent execution), the reference counter 204 is decreased (dec).

Main thread 202 first references object ABC(.1.) with variable 'a.' As a result of the reference by main thread 202, the reference counter 204 is increased from an initial zero value to a count value of '1.' The variable 'a' is then passed at 210 by the main thread 202 into the function runTask{(foo(a)}, which initiates first thread 206. The reference from first thread 206 to object ABC(.1.) with variable 'aa' causes the reference counter 204 to increase the reference count to a count value of '2.'

At this stage, multiple threads (i.e., main thread 202 and first thread 206) are being executed and any reference to the object ABC(.1.) updates the reference counter 204 of the object ABC(.1.). For example, reference by variables 'b' and 'c' of the main thread 202 to the object ABC(.1.) respectively cause the reference counter 204 to be increased to a count value of '4' and '6.'. As variables 'b' and 'c' complete access to the object ABC(.1.), each variable goes out of scope ("//b is dead" and "//c is dead") and is no longer useable. This results in each variable no longer referencing the object ABC(.1.), which thereby decreases the count value (in each instance) of the reference counter 204 to a count value of '5.' In one embodiment, when variable 'a' references a new object ABC(.20.), the reference counter 204 associated with the object ABC(.1.) is decreased since the reference to object ABC(.1.) is out of scope ("//a is redefined").

Similarly, first thread 206 includes variables (var) 'aa,' 'bb,' 'cc,' 'dd,' 'x,' 'y,' 'z' and 'u' that access the object ABC(.1.). As a variable references the object ABC(.1.), the reference counter 204 is increased. As a variable goes out of scope, the reference counter 204 is decreased. For example, when variable 'dd' references the object ABC(.1.), the reference counter 204 is increased to a count value of 6, whereas when variable 'bb' goes out of scope the reference count 204 is decreased since variable 'bb' goes out of scope ("//bb is dead"). When the last variable, in this example variable 'u,' goes out of scope, the count value of the reference counter 204 is decreased to a zero value, and the object ABC(.1.) is released.

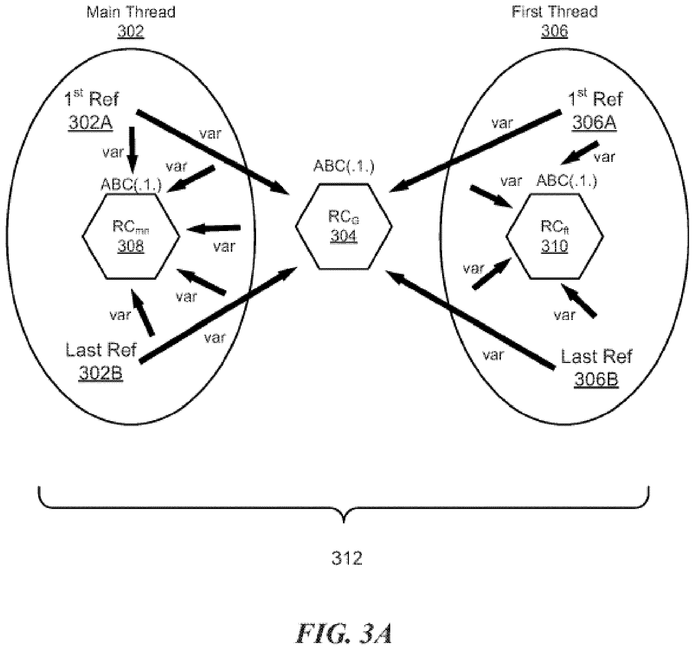

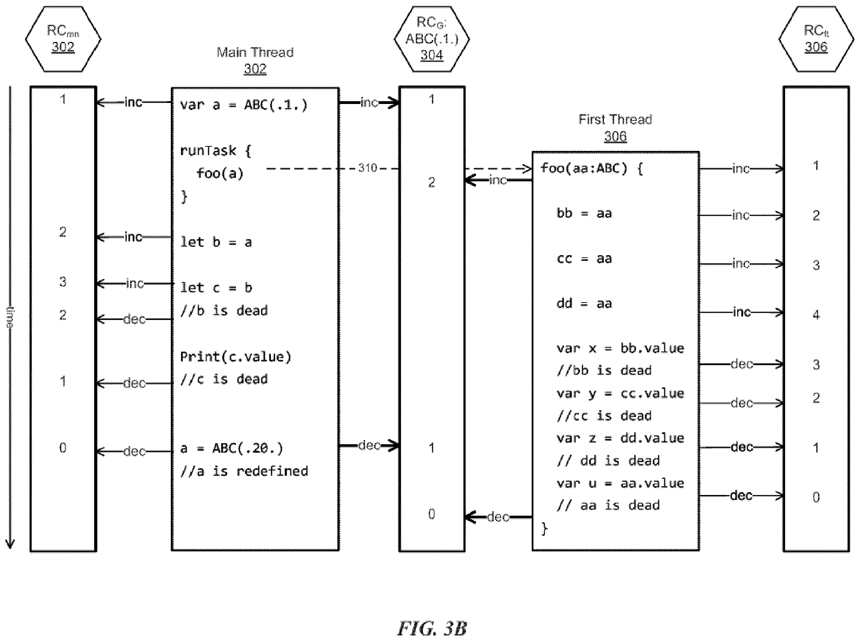

FIGS. 3A and 3B illustrate an example of threads referencing data in a memory management system in accordance with an embodiment of the disclosure. While the conventional method of referencing data in memory has many benefits, each time an object stored in memory is referenced, a lock instruction is employed by the system. As the number of references to the object increases, a significant amount overhead is also generated. That is, as the number of references increases, the number of lock instructions associated with the reference also increases.

FIG. 3A illustrates an example overview of two threads of a process referencing data stored in memory. Main thread 302 and first thread 306 of a process, similar to the embodiment of FIG. 2A, have variables (var) that reference (or point to) data that is allocated to a particular space in memory and for which a reference counter tracks the number of references being made. However, unlike the conventional method, the memory management system 312 of FIG. 3A employs three reference counters RC_{G} 304, RCₘₙ 308 and RC_{ft} 310.

In one embodiment of the memory management system 312, a global reference counter RC_{G} 304 is created when the object ABC(.1.) is allocated to memory. The global reference counter RC_{G} 304 tracks references from main thread 302 and first thread 306 when the reference is a first reference 302A and 306A to the object ABC(.1.) or a last reference 302B and 306B to the object ABC(.1.). Accordingly, the global reference counter RC_{G} 304 tracks initiation of a thread (first reference) and exiting (going out of scope, or last reference) of a thread. In one embodiment, references made to the global reference counter RC_{G} 304 employ the afore-mentioned locking mechanism and are demonstrated by dark arrows.

In addition to the global reference counter RC_{G} 304, each of the main thread 302 and the first thread 306 initiate a local reference counter RCₘₙ 308 and RC_{ft} 310, respectively, that assumes part of the reference counting operations for the object ABC(.1.). In one embodiment, when the main thread 302 or first thread 306 references the object ABC(.1.), the associated local thread counter RCₘₙ 308 and RC_{ft} 310 is updated (e.g., increased or decreased) as opposed to the global reference counter RC_{G} 304. Unlike the global reference counter RC_{G} 304, each of the local reference counters RCₘₙ 308 and RC_{ft} 310 are respectively updated when the main thread 302 or first thread 306 reference the object ABC(.1.) other than during the first or last reference. In another embodiment, only active threads (i.e., threads meeting or exceeding a threshold of activity) create a local reference counter, whereas all other, non-active threads (i.e., threads failing to meet the threshold of activity) utilize the global reference counter RC_{G} 304.

In one embodiment, references made to the local reference counters RCₘₙ 308 and RCft310 operate in a lock-free manner. An object is considered lock-free if it guarantees that in a system with multiple threads attempting to perform operations on the object, some thread will complete an operation successfully in a finite number of system steps even with the possibility of arbitrary thread delays, provided that not all threads are delayed indefinitely (i.e., some thread completes operation).

By virtue of the lock-free operation, a lock instruction is not required in order to update the respective local reference counter RCₘₙ 308 and RC_{ft} 310, thereby saving a significant amount of overhead. That is, by implementation of a lock-free counting mechanism, problems associated with locking, including performance bottlenecks, susceptibility to delays and failures, design complications and, in real-time systems, priority inversion, may be avoided.

FIG. 3B illustrates an example of a multithreaded process in which main thread 302 and first thread 306 reference data (e.g., object ABC(.1.)) allocated in memory. When the object ABC(.1.) is initially created, the global reference counter RC_{G} 304 is also created. As noted above, the global reference counter RC_{G} 304 provides a reference count for the number of threads currently accessing the object ABC(.1.). That is, the global reference counter RC_{G} 304 equals the number of threads accessing the object ABC(.1.) at any point in time. Each first or last reference to the object ABC(.1.) by a thread causes the reference counter 204 to be updated (e.g., increased or decreased). For example, when main thread 302 first references the object (var a = ABC(.1.)), the global reference counter RC_{G} 304 is increased from a zero value to a count value of '1.' Similarly, and after main thread 302 passes variable a to first thread 306 via runTask{foo(a)} at 310, when first thread 306 first references the object (foo(aa:ABC)), the global reference counter RC_{G} 304 is increased from a count value of ' 1' to a count value of '2.' In one embodiment, to prevent other threads from accessing the same object ABC(.1.) at the same time, the afore-mentioned locking mechanism may be employed.

During the first reference to the object ABC(.1.) by the main thread 302 and first thread 306, a respective local reference counter RCₘₙ 308 and RC_{ft} 310 is initialized. Once the local reference counters RCₘₙ 308 and RC_{ft} 310 are initialized, subsequent updates are performed to the local reference counter RCₘₙ 308 and RC_{ft} 310. For example, when main thread 302 first references the object (var a = ABC(.1.)), local reference counter RCₘₙ 308 is initialized and increased by a count of '1.' Subsequent references to the object ABC(.1.) also update (e.g., increase or decrease) the local reference counter RCₘₙ 308 by a count of' 1' in a manner similar to the implementation described above with respect to FIG. 2B, and is not repeated herein. Similarly, when main thread 306 first references the object (foo(aa:ABC)), local reference counter RC_{ft} 310 is initialized and increased by a count of '1.' Subsequent references also update the local reference counter RCₘₙ 310 by a count of' 1.'

In another embodiment, when the main thread 302 and first thread 306 reference the object ABC(.1.) as a last reference, the local reference counter RCₘₙ 308 and RC_{ft} 310 for the respective thread is decreased to a zero value. For example, when main thread 302 redefines variable 'a' to reference object ABC(.2) (var a = ABC(.2.)), the local reference counter RCₘₙ 308 is decreased to a zero count value, thereby causing the main thread 302 to reference the global reference counter RC_{G} 304 to decrease the count value to '1.' Similarly, when the last variable (var u) in first thread 306 goes out of scope (//aa is dead), the local reference counter RC_{ft} 310 is decreased to a zero count vale, thereby causing the first thread 306 to reference the global reference counter RC_{G} 304 to decrease the count value to '0,' at which time the object ABC(.1.) may be released from memory.

As noted above, references to the local reference counters are performed in a lock-free manner, whereas references to the global counter are performed using the locking mechanism.

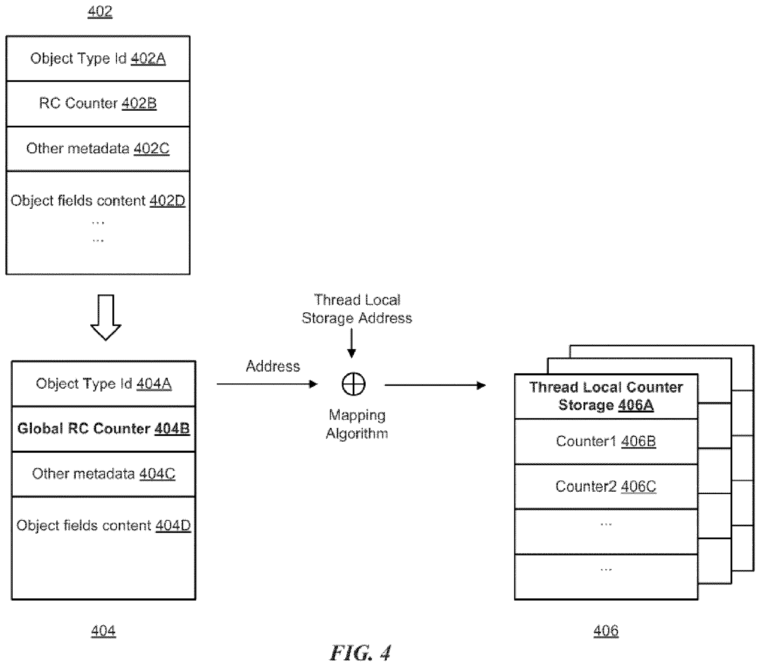

FIG. 4 illustrates example object layouts in accordance with various embodiments of the disclosure. A program in an object oriented language, such as C++, combines data and instructions or methods that operate on the data into a single unit, namely the object. The methods and variables for a particular object are defined by a class template. During the running of the program, memory space can be unnecessarily occupied by objects that are no longer used. As discussed above, an automatic mechanism to reclaim memory space may be implemented by associating a reference counter with each object that is the target of a reference from another object. Using such a mechanism, when the reference counter returns to a zero value, the target object is destroyed and the memory space containing the object is released.

In the conventional memory management system of FIGS. 2A and 2B, the class layout (or template) 402 of the object in memory includes the object type 402A, reference counter 402B and various other fields, such as metadata 402C and content 402D. To implement the memory management system including both a global reference counter and local reference counter, as described with reference to FIGS. 3A and 3B, the object layout 402 is transformed into a new object layout 404. The new object layout 404 includes object type ID 404A, global reference counter 404B which replaces the reference counter 403B of object layout 402, metadata 402C and content 402D.

In one embodiment, the new object 404 address is mapped to a storage 406 including thread local counter storage 406A which contains one or more counters, such as counter 1 406B and counter 2 406C. Mapping the address of the object to a local address of each of the first and second local reference counters (counter 1 406B and counter 2 406C), includes, but is not limited to, the following:
(1) Direct mapping: The object address is mapped to the first and second local reference counter (counter1 406B and counter2 406C) addresses by changing the associated page addresses. For example, assume for purposes of discussion that a variable points to the object in memory with an address of '1234,' where '12' represents the page address and '34' represents the reference counter page offset. When a first thread associated with counter1 406B is created with a local address '88,' the page address '1234' may be mapped into the local thread address to become '8834' (the address where the local counter1 406B is stored). A similar mapping may be implemented for coutner2 406C.
(2) Hashmap: Applying a hashmap to store an address of the object to a local address of the associated local reference counter. For example, for purposes of discussion, we assume an object address 1234. A hashmap is stored in a thread. When the thread accesses an associated local reference counter, the object address 1234 is input into the stored hashmap. The output of the hashmap will generate the local reference counter address for the associated thread; and
(3) Active threads: For purposes of discussion, assume there are one hundred threads executing, in which two of the one hundred threads are actively referencing objects stored in memory. Active, as the term is used herein, refers to a thread meeting or exceeding a threshold of activity. Active threads will employ the new object layout in a global reference counter and local reference counters are employed. For the two active threads, a respective hashmap is stored for those two threads, as described above. Otherwise, each of the other ninety-eight non-active threads implement the conventional reference counting method.

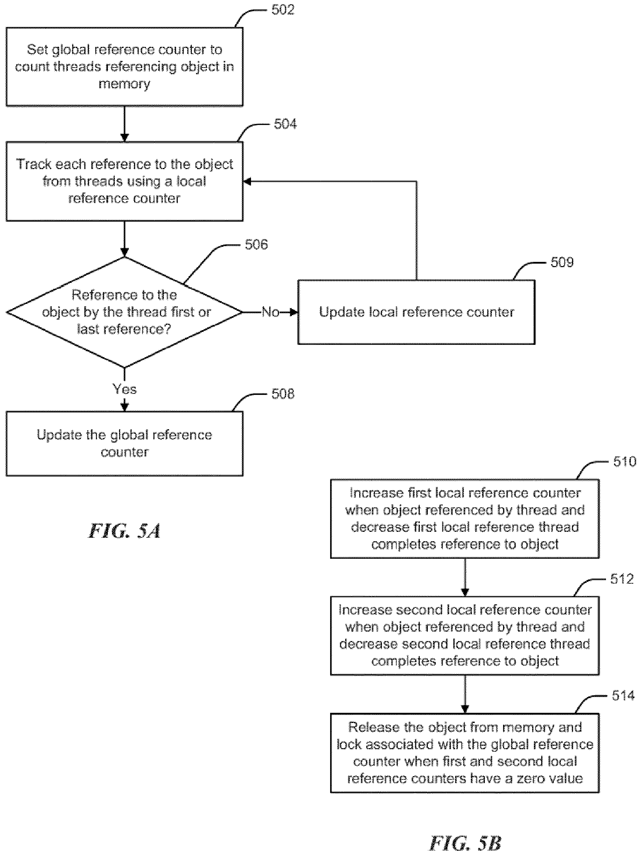

FIG. 5A illustrates a flow diagram of reference counting in accordance with FIGS. 1, 3A, 3B and 4. The methodology disclosed in the flow diagrams that follow may be implemented, in one non-limiting embodiment, by an application server 106N (FIG. 1). The application server 106N may be responsible for executing threads of a process that access a distributed data store containing objects for processing. However, it is appreciated that implementation is not limited to the application server, and that any of the various components depicted in FIG.1 may be responsible for processing the disclosed methodology.

At 502, when an object ABC(.1.) is created and allocated to memory, a global reference counter RC_{G} 304 is set to count the number of threads referencing (pointing to) the object. The global reference counter RC_{G} 304, as explained above, tracks references being made by the threads to the object when the reference is either a first reference 302A/302B or last reference 302B/306B. The count value of the global reference counter RC_{G} 304 is updated (e.g., increased or decreased) depending on whether the reference is a first reference 302A/306A (increase the count value) or a last reference 302B/306B (decrease the count value). In one embodiment, a locking mechanism is employed to protect updates to the global reference counter.

When a first reference 302A/306A is being made to the object ABC(.1.) by a thread, a local reference counter is also created and initiated. The local reference counter, such as local reference counter RCₘₙ 308 or RC_{ft} 310, tracks (counts) references made to the object ABC(.1.) by each thread, where the reference is not a first reference 302A/306A or last reference 302B/306B. In one embodiment, the local reference counters are employed in a lock-free manner.

If reference by the thread to access the object is a first reference 302A/306A or last reference 302B/306B, as determined in 506, then the process proceeds to 508 where the global reference counter RC_{G} 304 is updated. If reference by the thread to access the object is not a first reference 302A/306A or last reference 302B/306B, then the local reference counter is updated to increase or decrease the count value at 509.

FIG. 5B is an example flow diagram of reference counting in accordance with FIG. 5A. The local reference counter, such as local reference counters RCₘₙ 308 or RC_{ft} 310, is updated at 509 in FIG. 5A in response to determining that a reference to the object is not a first reference 302A/306A or last reference 302B/306B.

At 510, the update increases local reference counter RCₘₙ 308 when the object ABC(.1.) is referenced by the main thread 302 and decreases the local reference counter RCₘₙ 308 when the main thread 302 completes its reference (goes out of scope) to the object ABC(.1.).

At 512, the update increases local reference counter RC_{ft} 310 when the object ABC(.1.) is referenced by the first thread 306 and decreases the local reference counter RC_{ft} 310 when the first thread 306 completes its reference (goes out of scope) to the object ABC(.1.).

At 514, once both of the local reference counters RCₘₙ 308 and RC_{ft} 310 have reached a zero count value, the global reference counter RC_{G} 304 will also have reached a zero count value and the object allocated to memory, along with the associated lock, will be released.

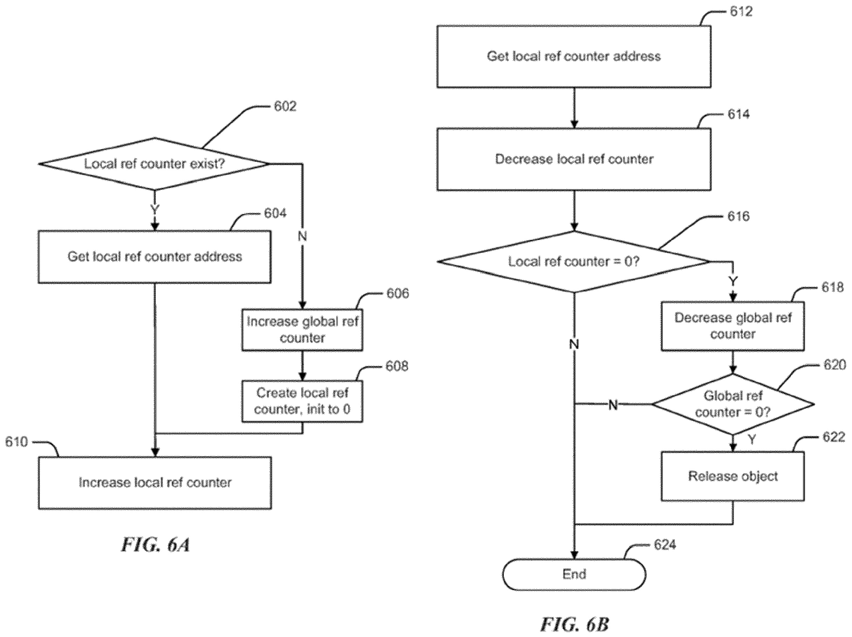

FIG. 6A illustrates one embodiment of a flow diagram for a local reference counter in accordance with FIGS. 5A and 5B. In particular, the flow diagram demonstrates the methodology of increasing a local reference counter, such as local reference counters RCₘₙ 308 and RC_{ft}.

At 602, the application server 106N (or any other component in the memory management system of FIG. 1) determines whether a local reference counter RCₘₙ 308 or RC_{ft} exists for a particular thread, such as main thread 302 or first thread 306, accessing the object. If a local reference counter RCₘₙ 308 or RC_{ft} exists, the process proceeds to 604, where the address of the local reference counter RCₘₙ 308 or RC_{ft} 310 is acquired, and the local reference counter RCₘₙ 308 and RC_{ft} 310 is increased at 610.

If the application server 106N (or any other component in the memory management system of FIG. 1) determines that a local reference counter RCₘₙ 308 and RC_{ft} 310 does not exist, the process proceeds to 606 where the global reference counter RC_{G} 304 is increased. As explained above, since no local reference counter RCₘₙ 308 and RC_{ft} 310 exists, the thread reference is considered a first reference 302A/306A, thereby increasing the global reference counter RC_{G} 304.

At 608, a local reference counter RCₘₙ 308 and RC_{ft} 310 is created and initialized to a zero value, followed by an increase to the local reference counter RCₘₙ 308 and RC_{ft} 310 t 610 (to acknowledge the first reference).

FIG. 6B illustrates another embodiment of a flow diagram for a local reference counter in accordance with FIGS. 5A and 5B. In particular, the flow diagram demonstrates the methodology of decreasing a local reference counter, such as local reference counters RCₘₙ 308 and RC_{ft} 310.

At 612, when thread, such as main thread 302 or first thread 306, references the object ABC(.1.), the respective local reference counter address is retrieved, and the local reference counter RCₘₙ 308 or RCft310 is decreased at 614.

If the application server 106N (or any other component in the memory management system of FIG. 1) determines the local reference counter RCₘₙ 308 or RCft310 does not have a zero count value (non-zero count value) after being decreased at 616, the process (method) ends at 624, as the thread is still referencing the object ABC(.1.).

If the application server 106N (or any other component in the memory management system of FIG. 1) determines the local reference counter RCₘₙ 308 or RC_{ft} 310 is a zero value after being decreased at 616, the process (method) continues to 618 where the global reference counter RC_{G} 304 is decreased since the local reference counter RCₘₙ 308 or RC_{ft} 310 having a zero count value implies a last reference 302B/306B (i.e., the thread referencing the object is going out of scope).

At 620, the global reference counter RC_{G} 304 is checked to determine whether the reverence count has a zero value. If the reference count does not equal a zero value, then the process (method) proceeds to 624, as described above. Otherwise, if the reference count has a zero value, then the object ABC(.1.) is no longer being referenced by any thread (i.e., all local reference counters have a zero count value), and the object ABC(.1.) is related at 622. The process (method) then completes at 624.

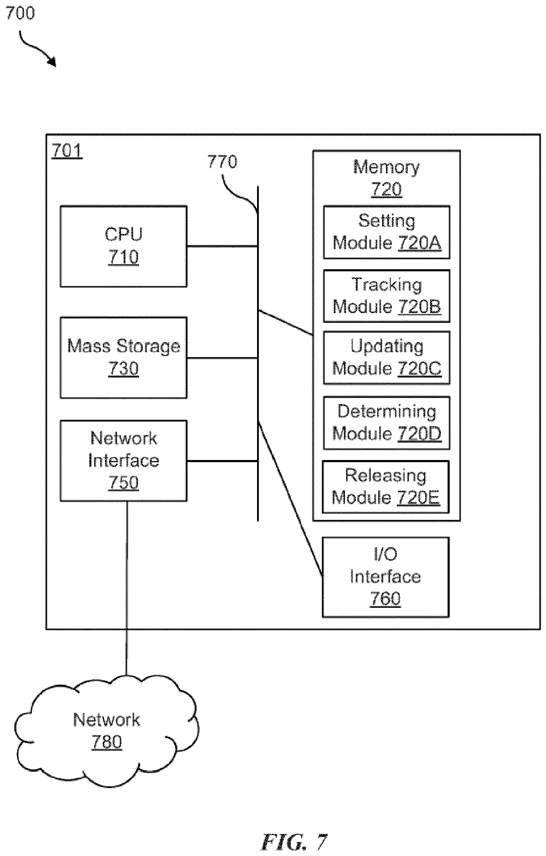

FIG. 7 is a block diagram of a network device 700 that can be used to implement various embodiments. Specific network devices may utilize all of the components shown, or only a subset of the components, and levels of integration may vary from device to device. Furthermore, the network device 700 may contain multiple instances of a component, such as multiple processing units, processors, memories, transmitters, receivers, etc. The network device 700 may comprise a processing unit 701 equipped with one or more input/output devices, such as network interfaces, storage interfaces, and the like. The processing unit 701 may include a central processing unit (CPU) 710, a memory 720, a mass storage device 730, and an I/O interface 760 connected to a bus 770. The bus 770 may be one or more of any type of several bus architectures including a memory bus or memory controller, a peripheral bus or the like.

The CPU 710 may comprise any type of electronic data processor. The memory 720 may comprise any type of system memory such as static random access memory (SRAM), dynamic random access memory (DRAM), synchronous DRAM (SDRAM), read-only memory (ROM), a combination thereof, or the like. In an embodiment, the memory 720 may include ROM for use at boot-up, and DRAM for program and data storage for use while executing programs. In embodiments, the memory 720 is non-transitory. In one embodiment, the memory 720 includes a setting module 702A to set a global reference counter associated with a lock to count one or more threads of a process referencing an object allocated in the memory, a tracking module to track each reference to the object from the one or more threads using a corresponding local reference counter, an updating module to update the global reference counter when the tracked reference to the object by each of the one or more threads is a first reference or last reference, and a releasing module to release the object from the memory when the global reference counter is updated to a zero value.

The mass storage device 730 may comprise any type of storage device configured to store data, programs, and other information and to make the data, programs, and other information accessible via the bus 770. The mass storage device 730 may comprise, for example, one or more of a solid state drive, hard disk drive, a magnetic disk drive, an optical disk drive, or the like.

The processing unit 701 also includes one or more network interfaces 750, which may comprise wired links, such as an Ethernet cable or the like, and/or wireless links to access nodes or one or more networks 780. The network interface 750 allows the processing unit 701 to communicate with remote units via the networks 780. For example, the network interface 750 may provide wireless communication via one or more transmitters/transmit antennas and one or more receivers/receive antennas. In an embodiment, the processing unit 701 is coupled to a local-area network or a wide-area network for data processing and communications with remote devices, such as other processing units, the Internet, remote storage facilities, or the like.

In an example embodiment, the network device 700 includes a counter module establishing a global reference counter associated with a lock to count one or more threads of a process referencing an object allocated in the memory, a reference tracking module tracking, by each of the threads, each reference to the object by the thread using a corresponding local reference counter, and a counter updating module updating the global reference counter whenever a reference to the object by each of the one or more threads is an initial reference to the object or a final reference to the object. In some embodiments, the network device 700 may include other or additional modules for performing any one of or combination of steps described in the embodiments. Further, any of the additional or alternative embodiments or aspects of the method, as shown in any of the figures or recited in any of the claims, are also contemplated to include similar modules.

In accordance with various embodiments of the present disclosure, the methods described herein may be implemented using a hardware computer system that executes software programs. Further, in a non-limited embodiment, implementations can include distributed processing, component/object distributed processing, and parallel processing. Virtual computer system processing can be constructed to implement one or more of the methods or functionalities as described herein, and a processor described herein may be used to support a virtual processing environment.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

For purposes of this document, each process associated with the disclosed technology may be performed continuously and by one or more computing devices. Each step in a process may be performed by the same or different computing devices as those used in other steps, and each step need not necessarily be performed by a single computing device.

## Claims

1. A device (700) for reference counting, comprising:
a non-transitory memory storage (720) comprising instructions; and
one or more processors (710) in communication with the memory (720), wherein the one or more processors (710) are configured to execute the instructions to perform operations comprising:
establishing a global reference counter associated with a lock to count one or more threads of a process referencing an object allocated in the memory (720);
tracking, by each of the threads, each reference to the object by the thread using a corresponding local reference counter implemented in a lock-free manner; and
updating the global reference counter whenever a reference to the object by each of the one or more threads is an initial reference to the object or a final reference to the object, wherein the local reference counter is configured to be updated when the one or more threads reference the object other than during the initial reference or the final reference.

2. The device (700) of claim 1, wherein tracking, by a first thread, a reference to the object by the first thread using a corresponding local reference counter comprises:
determining whether the reference by the thread is the initial reference to the object;
in response to determining that reference to the object is the initial reference to the object:
the updating comprising increasing the global reference counter and initializing the local reference counter with a zero value; and
increasing the local reference counter without locking the local reference counter.

3. The device (700) of any of claims 1 to 2, wherein tracking, by a first thread, a reference to the object by the first thread using a corresponding local reference counter comprises:
decreasing the local reference counter without locking the local reference counter;
determining whether the local reference counter has a zero value;
in response to determining that the local reference counter has a zero value, the updating comprising decreasing the global reference counter; and
releasing the object from the memory (720) when the global reference counter is updated to a zero value.

4. The device (700) of any of claims 1 to 3, wherein a first of the one or more threads corresponds to a first local reference counter and second of the one or more threads corresponds to a second local reference counter, and wherein the operations further comprise:
increasing the first local reference counter when the first thread references the object and decreasing the first local reference counter when the first thread no longer references the object;
increasing the second local reference counter when the second thread references the object and decreasing the second local reference counter when the second thread no longer references the object; and
releasing the object from the memory (720) and the lock associated with the global reference counter when the first local counter and the second local counter have a zero value.

5. The device (700) of claim 4, wherein the operations further comprise:
updating a layout of the object to include the global reference counter; and
mapping an address of the object to a local address of each of the first and second corresponding local reference counters.

6. The device (700) of claim 5, wherein mapping an address of the object to a local address of each of the first and second local reference counters comprises one of:
(1) mapping the shared object address to addresses of the first and second local reference counters by changing associated page addresses,
(2) using a hashmap to store a mapping of an address of the object to a local address of the associated reference counter, and
(3) employing the first and second local reference counters when satisfying an activity level threshold for the one or more threads.

7. The device (700) of any of claims 1 to 6, wherein the lock is retrieved from a lock manager and is coupled to a distributed data store to
lock access to the object,
grant a lock to the process for the object stored in the memory (720), and
prevent other processes from accessing the object while locked.

8. The device (700) of claim 5, wherein the object is a class instance of a programming language.

9. A computer-implemented method for reference counting, comprising:
establishing (502) a global reference counter associated with a lock to count one or more threads of a process referencing an object allocated in the memory (720);
tracking (504), by each of the threads, each reference to the object by the thread using a corresponding local reference counter implemented in a lock-free manner; and
updating (508) the global reference counter whenever a reference to the object by each of the one or more threads is an initial reference to the object or a final reference to the object, wherein the local reference counter is configured to be updated when the one or more threads reference the object other than during the initial reference or the final reference.

10. The method of claim 9, wherein tracking, by a first thread, a reference to the object by the first thread using a corresponding local reference counter comprises:
determining (602) whether the reference by the thread is the initial reference to the object;
in response to determining that reference to the object is the initial reference to the object:
the updating comprises increasing (606) the global reference counter and initializing (608) the local reference counter with a zero value; and
increasing (610) the local reference counter without locking the local reference counter.

11. The method of any of claims 9 to 10, wherein tracking, by a first thread, a reference to the object by the first thread using a corresponding local reference counter comprises:
decreasing (614) the local reference counter without locking the local reference counter;
determining whether the local reference counter has a zero value;
in response to determining that the local reference counter has a zero value, the updating comprising decreasing (618) the global reference counter; and
releasing (622) the object from the memory (700) when the global reference counter is updated to a zero value.

12. The method of any of claims 9 to 11, wherein a first of the one or more threads corresponds to a first local reference counter and second of the one or more threads corresponds to a second local reference counter, and further comprising:
increasing (510) the first local reference counter when the first thread references the object and decreasing the first local reference counter when the first thread no longer references the object;
increasing (512) the second local reference counter when the second thread references the object and decreasing the second local reference counter when the second thread no longer references the object; and
releasing (514) the object from the memory (700) and the lock associated with the global reference counter when the first local counter and the second local counter have a zero value.

13. The method of claim 12, further comprising:
updating a layout of the object to include the global reference counter; and
mapping an address of the object to a local address of each of the first and second corresponding local reference counters.

14. The method of claim 13, wherein mapping an address of the object to a local address of each of the first and second local reference counters further comprises one of:
(1) mapping the shared object address to addresses of the first and second local reference counters by changing associated page addresses,
(2) using a hashmap to store a mapping of an address of the object to a local address of the associated reference counter, and
(3) employing the first and second local reference counters when satisfying an activity level threshold for the one or more threads.

## Patentansprüche

1. Vorrichtung (700) zum Zählen von Verweisen, umfassend:
einen nichtflüchtigen Speicher (720), der Anweisungen umfasst; und
einen oder mehrere Prozessoren (710) in Kommunikation mit dem Speicher (720), wobei der eine oder die mehreren Prozessoren (710) konfiguriert sind, um die Anweisungen auszuführen, um Operationen durchzuführen, umfassend:
Einrichten eines globalen Verweiszählers, der einer Sperre zugeordnet ist, um einen oder mehrere Threads eines Prozesses zu zählen, der auf ein Objekt verweist, das in dem Speicher (720) zugewiesen ist;
Verfolgen, durch jeden der Threads, jedes Verweises auf das Objekt durch den Thread unter Verwendung eines entsprechenden lokalen Verweiszählers, der auf sperrenfreie Weise implementiert ist; und
Aktualisieren des globalen Verweiszählers immer dann, wenn ein Verweis auf das Objekt durch jeden von dem einen oder den mehreren Threads ein anfänglicher Verweis auf das Objekt oder ein finaler Verweis auf das Objekt ist, wobei der lokale Verweiszähler konfiguriert ist, um aktualisiert zu werden, wenn der eine oder die mehreren Threads anders als während des anfänglichen Verweises oder des finalen Verweises auf das Objekt verweisen.

2. Vorrichtung (700) nach Anspruch 1, wobei das Verfolgen, durch einen ersten Thread, eines Verweises auf das Objekt durch den ersten Thread unter Verwendung eines entsprechenden lokalen Verweiszählers Folgendes umfasst:
Bestimmen, ob der Verweis durch den Thread der anfängliche Verweis auf das Objekt ist;
als Reaktion auf das Bestimmen, dass Verweis auf das Objekt der anfängliche Verweis auf das Objekt ist:
das Aktualisieren umfasst Erhöhen des globalen Verweiszählers und Initialisieren des lokalen Verweiszählers mit einem Nullwert; und
Erhöhen des lokalen Verweiszählers, ohne den lokalen Verweiszähler zu sperren.

3. Vorrichtung (700) nach einem der Ansprüche 1 bis 2, wobei das Verfolgen, durch einen ersten Thread, eines Verweises auf das Objekt durch den ersten Thread unter Verwendung eines entsprechenden lokalen Verweiszählers Folgendes umfasst:
Verringern des lokalen Verweiszählers, ohne den lokalen Verweiszähler zu sperren;
Bestimmen, ob der lokale Verweiszähler einen Nullwert aufweist;
als Reaktion auf das Bestimmen, dass der lokale Verweiszähler einen Nullwert aufweist, umfasst das Aktualisieren Verringern des globalen Verweiszählers; und
Freigeben des Objekts aus dem Speicher (720), wenn der globale Verweiszähler auf einen Nullwert aktualisiert wird.

4. Vorrichtung (700) nach einem der Ansprüche 1 bis 3, wobei ein erster von dem einen oder den mehreren Threads einem ersten lokalen Verweiszähler entspricht und ein zweiter von dem einen oder den mehreren Threads einem zweiten lokalen Verweiszähler entspricht, und wobei die Operationen ferner Folgendes umfassen:
Erhöhen des ersten lokalen Verweiszählers, wenn der erste Thread auf das Objekt verweist, und Verringern des ersten lokalen Verweiszählers, wenn der erste Thread nicht mehr auf das Objekt verweist;
Erhöhen des zweiten lokalen Verweiszählers, wenn der zweite Thread auf das Objekt verweist, und Verringern des zweiten lokalen Verweiszählers, wenn der zweite Thread nicht mehr auf das Objekt verweist; und
Freigeben des Objekts aus dem Speicher (720) und der Sperre, die dem globalen Verweiszähler zugeordnet ist, wenn der erste lokale Zähler und der zweite lokale Zähler einen Nullwert aufweisen.

5. Vorrichtung (700) nach Anspruch 4, wobei die Operationen ferner Folgendes umfassen:
Aktualisieren eines Layouts des Objekts, um den globalen Verweiszähler einzuschließen; und
Zuordnen einer Adresse des Objekts zu einer lokalen Adresse von jedem von dem ersten und dem zweiten entsprechenden lokalen Verweiszähler.

6. Vorrichtung (700) nach Anspruch 5, wobei das Zuordnen einer Adresse des Objekts zu einer lokalen Adresse von jedem von dem ersten und dem zweiten lokalen Verweiszähler eines des Folgenden umfasst:
(1) Zuordnen der geteilten Objektadresse zu Adressen von dem ersten und dem zweiten lokalen Verweiszähler durch Ändern von zugehörigen Seitenadressen,
(2) Verwenden einer Hashmap, um eine Zuordnung einer Adresse des Objekts zu einer lokalen Adresse des zugehörigen Verweiszählers zu speichern, und
(3) Einsetzen des ersten und des zweiten lokalen Verweiszählers, wenn ein Aktivitätsniveauschwellenwert für den einen oder die mehreren Threads erfüllt ist.

7. Vorrichtung (700) nach einem der Ansprüche 1 bis 6, wobei die Sperre von einem Sperrenmanager abgerufen wird und an einen verteilten Datenspeicher gekoppelt ist, um
Zugriff auf das Objekt zu sperren,
eine Sperre für den Prozess für das Objekt zu gewähren, das in dem Speicher (720) gespeichert ist, und
zu verhindern, dass andere Prozesse auf das Objekt zugreifen, während es gesperrt ist.

8. Vorrichtung (700) nach Anspruch 5, wobei das Objekt eine Klasseninstanz einer Programmiersprache ist.

9. Computerimplementiertes Verfahren zum Zählen von Verweisen, umfassend:
Einrichten (502) eines globalen Verweiszählers, der einer Sperre zugeordnet ist, um einen oder mehrere Threads eines Prozesses zu zählen, der auf ein Objekt verweist, das in dem Speicher (720) zugewiesen ist;
Verfolgen (504), durch jeden der Threads, jedes Verweises auf das Objekt durch den Thread unter Verwendung eines entsprechenden lokalen Verweiszählers, der auf eine sperrfreie Weise implementiert ist; und
Aktualisieren (508) des globalen Verweiszählers immer dann, wenn ein Verweis auf das Objekt durch jeden von dem einen oder den mehreren Threads ein anfänglicher Verweis auf das Objekt oder ein finaler Verweis auf das Objekt ist, wobei der lokale Verweiszähler konfiguriert ist, um aktualisiert zu werden, wenn der eine oder die mehreren Threads anders als während des anfänglichen Verweises oder des finalen Verweises auf das Objekt verweisen.

10. Verfahren nach Anspruch 9, wobei das Verfolgen, durch einen ersten Thread, eines Verweises auf das Objekt durch den ersten Thread unter Verwendung eines entsprechenden lokalen Verweiszählers Folgendes umfasst:
Bestimmen (602), ob der Verweis durch den Thread der anfängliche Verweis auf das Objekt ist;
als Reaktion auf das Bestimmen, dass Verweis auf das Objekt der anfängliche Verweis auf das Objekt ist:
das Aktualisieren umfasst Erhöhen (606) des globalen Verweiszählers und Initialisieren (608) des lokalen Verweiszählers mit einem Nullwert; und
Erhöhen (610) des lokalen Verweiszählers, ohne den lokalen Verweiszähler zu sperren.

11. Verfahren nach einem der Ansprüche 9 bis 10, wobei das Verfolgen, durch einen ersten Thread, eines Verweises auf das Objekt durch den ersten Thread unter Verwendung eines entsprechenden lokalen Verweiszählers Folgendes umfasst:
Verringern (614) des lokalen Verweiszählers, ohne den lokalen Verweiszähler zu sperren;
Bestimmen, ob der lokale Verweiszähler einen Nullwert aufweist;
als Reaktion auf das Bestimmen, dass der lokale Verweiszähler einen Nullwert aufweist, umfasst das Aktualisieren Verringern (618) des globalen Verweiszählers; und
Freigeben (622) des Objekts aus dem Speicher (700), wenn der globale Verweiszähler auf einen Nullwert aktualisiert wird.

12. Verfahren nach einem der Ansprüche 9 bis 11, wobei ein erster von dem einen oder den mehreren Threads einem ersten lokalen Verweiszähler entspricht und der zweite von dem einen oder den mehreren Threads einem zweiten lokalen Verweiszähler entspricht, und ferner umfassend:
Erhöhen (510) des ersten lokalen Verweiszählers, wenn der erste Thread auf das Objekt verweist, und Verringern des ersten lokalen Verweiszählers, wenn der erste Thread nicht mehr auf das Objekt verweist;
Erhöhen (512) des zweiten lokalen Verweiszählers, wenn der zweite Thread auf das Objekt verweist, und Verringern des zweiten lokalen Verweiszählers, wenn der zweite Thread nicht mehr auf das Objekt verweist; und
Freigeben (514) des Objekts aus dem Speicher (700) und der Sperre, die dem globalen Verweiszähler zugeordnet ist, wenn der erste lokale Zähler und der zweite lokale Zähler einen Nullwert aufweisen.

13. Verfahren nach Anspruch 12, ferner umfassend:
Aktualisieren eines Layouts des Objekts, um den globalen Verweiszähler einzuschließen; und
Zuordnen einer Adresse des Objekts zu einer lokalen Adresse von jedem von dem ersten und dem zweiten entsprechenden lokalen Verweiszähler.

14. Verfahren nach Anspruch 13, wobei das Zuordnen einer Adresse des Objekts zu einer lokalen Adresse von jedem von dem ersten und dem zweiten lokalen Verweiszähler ferner eines des Folgenden umfasst:
(1) Zuordnen der geteilten Objektadresse zu Adressen von dem ersten und dem zweiten lokalen Verweiszähler durch Ändern von zugehörigen Seitenadressen,
(2) Verwenden einer Hashmap, um eine Zuordnung einer Adresse des Objekts zu einer lokalen Adresse des zugehörigen Verweiszählers zu speichern, und
(3) Einsetzen des ersten und des zweiten lokalen Verweiszählers, wenn ein Aktivitätsniveauschwellenwert für den einen oder die mehreren Threads erfüllt ist.

## Revendications

1. Dispositif (700) de comptage de référence, comprenant :
une mémoire de stockage non transitoire (720) comprenant des instructions ; et
un ou plusieurs processeurs (710) en communication avec la mémoire (720), dans lequel les un ou plusieurs processeurs (710) sont configurés pour exécuter les instructions pour mettre en œuvre des opérations comprenant :
l'établissement d'un compteur de référence global associé à un verrou pour compter un ou plusieurs fils d'un processus référençant un objet attribué dans la mémoire (720) ;
le suivi, par chacun des fils, de chaque référence à l'objet par le fil à l'aide d'un compteur de référence local correspondant mis en œuvre de manière non verrouillée ; et
la mise à jour du compteur de référence global chaque fois qu'une référence à l'objet par chacun des un ou plusieurs fils est une référence initiale à l'objet ou une référence finale à l'objet, dans lequel le compteur de référence local est configuré pour être mis à jour lorsque les uns ou plusieurs fils référencent l'objet autrement que lors de la référence initiale ou de la référence finale.

2. Dispositif (700) selon la revendication 1, dans lequel le suivi, par un premier fil, d'une référence à l'objet par le premier fil à l'aide d'un compteur de référence local correspondant comprend :
la détermination de la question de savoir si la référence par le fil est la référence initiale à l'objet ;
en réponse à la détermination que la référence à l'objet est la référence initiale à l'objet :
la mise à jour comprenant l'augmentation du compteur de référence global et l'initialisation du compteur de référence local avec une valeur nulle ; et
l'augmentation du compteur de référence local sans verrouiller le compteur de référence local.

3. Dispositif (700) selon l'une quelconque des revendications 1 et 2, dans lequel le suivi, par un premier fil, d'une référence à l'objet par le premier fil à l'aide d'un compteur de référence local correspondant comprend :
la réduction du compteur de référence local sans verrouiller le compteur de référence local ;
la détermination de la question de savoir si le compteur de référence local a une valeur zéro ;
en réponse à la détermination selon laquelle le compteur de référence local a une valeur zéro, la mise à jour comprenant la réduction du compteur de référence global ; et
la libération de l'objet de la mémoire (720) lorsque le compteur de référence global est mis à jour à une valeur zéro.

4. Dispositif (700) selon l'une quelconque des revendications 1 à 3, dans lequel un premier des un ou plusieurs fils correspond à un premier compteur de référence local et un second des un ou plusieurs fils correspond à un second compteur de référence local, et dans lequel les opérations comprennent en outre :
l'augmentation du premier compteur de référence local lorsque le premier fil référence l'objet et la réduction du premier compteur de référence local lorsque le premier fil ne référence plus l'objet ;
l'augmentation du second compteur de référence local lorsque le second fil référence l'objet et la réduction du second compteur de référence local lorsque le second fil ne référence plus l'objet ; et
la libération de l'objet de la mémoire (720) et du verrouillage associé au compteur de référence global lorsque le premier compteur local et le second compteur local ont une valeur nulle.

5. Dispositif (700) selon la revendication 4, dans lequel les opérations comprennent en outre :
la mise à jour d'une disposition de l'objet pour inclure le compteur de référence global ; et
le mappage d'une adresse de l'objet à une adresse locale de chacun des premier et second compteurs de référence locaux correspondants.

6. Dispositif (700) selon la revendication 5, dans lequel le mappage d'une adresse de l'objet à une adresse locale de chacun des premier et second compteurs de référence locaux comprend l'un :
(1) du mappage de l'adresse d'objet partagé aux adresses des premier et second compteurs de référence locaux en modifiant les adresses de page associées,
(2) de l'utilisation d'une table de hachage pour stocker un mappage d'une adresse de l'objet à une adresse locale du compteur de référence associé, et
(3) de l'emploi des premier et second compteurs de référence locaux lors de la satisfaction d'un seuil de niveau d'activité pour les un ou plusieurs fils.

7. Dispositif (700) selon l'une quelconque des revendications 1 à 6, dans lequel le verrouillage est récupéré à partir d'un gestionnaire de verrouillage et est couplé à une mémoire de données distribuée pour
verrouiller l'accès à l'objet,
accorder un verrouillage au processus pour l'objet stocké dans la mémoire (720), et
empêcher d'autres processus d'accéder à l'objet lorsqu'il est verrouillé.

8. Dispositif (700) selon la revendication 5, dans lequel l'objet est une instance de classe d'un langage de programmation.

9. Procédé mis en œuvre par ordinateur pour le comptage de référence, comprenant :
l'établissement (502) d'un compteur de référence global associé à un verrouillage pour compter un ou plusieurs fils d'un processus référençant un objet attribué dans la mémoire (720) ;
le suivi (504), par chacun des fils, de chaque référence à l'objet par le fil à l'aide d'un compteur de référence local correspondant mis en œuvre de manière non verrouillée ; et
la mise à jour (508) du compteur de référence global chaque fois qu'une référence à l'objet par chacun des un ou plusieurs fils est une référence initiale à l'objet ou une référence finale à l'objet, dans lequel le compteur de référence local est configuré pour être mis à jour lorsque les uns ou plusieurs fils référencent l'objet autrement que lors de la référence initiale ou de la référence finale.

10. Procédé selon la revendication 9, dans lequel le suivi, par un premier fil, d'une référence à l'objet par le premier fil à l'aide d'un compteur de référence local correspondant comprend :
la détermination (602) de la question de savoir si la référence par le fil est la référence initiale à l'objet ;
en réponse à la détermination que la référence à l'objet est la référence initiale à l'objet :
la mise à jour comprend l'augmentation (606) du compteur de référence global et l'initialisation (608) du compteur de référence local avec une valeur zéro ; et
l'augmentation (610) du compteur de référence local sans verrouiller le compteur de référence local.

11. Procédé selon l'une quelconque des revendications 9 et 10, dans lequel le suivi, par un premier fil, d'une référence à l'objet par le premier fil à l'aide d'un compteur de référence local correspondant comprend :
la réduction (614) du compteur de référence local sans verrouiller le compteur de référence local ;
la détermination de la question de savoir si le compteur de référence local a une valeur zéro ;
en réponse à la détermination selon laquelle le compteur de référence local a une valeur zéro, la mise à jour comprenant la réduction (618) du compteur de référence global ; et
la libération (622) de l'objet de la mémoire (700) lorsque le compteur de référence global est mis à jour à une valeur zéro.

12. Procédé selon l'une quelconque des revendications 9 à 11, dans lequel un premier des un ou plusieurs fils correspond à un premier compteur de référence local et un second des un ou plusieurs fils correspond à un second compteur de référence local, et comprenant en outre :
l'augmentation (510) du premier compteur de référence local lorsque le premier fil référence l'objet et la réduction du premier compteur de référence local lorsque le premier fil ne référence plus l'objet ;
l'augmentation (512) du second compteur de référence local lorsque le second fil référence l'objet et la réduction du second compteur de référence local lorsque le second fil ne référence plus l'objet ; et
la libération (514) de l'objet de la mémoire (700) et du verrouillage associé au compteur de référence global lorsque le premier compteur local et le second compteur local ont une valeur nulle.

13. Procédé selon la revendication 12, comprenant en outre :
la mise à jour d'une disposition de l'objet pour inclure le compteur de référence global ; et
le mappage d'une adresse de l'objet à une adresse locale de chacun des premier et second compteurs de référence locaux correspondants.

14. Procédé selon la revendication 13, dans lequel le mappage d'une adresse de l'objet à une adresse locale de chacun des premier et second compteurs de référence locaux comprend en outre l'un :
(1) du mappage de l'adresse d'objet partagé aux adresses des premier et second compteurs de référence locaux en modifiant les adresses de page associées,
(2) de l'utilisation d'une table de hachage pour stocker un mappage d'une adresse de l'objet à une adresse locale du compteur de référence associé, et
(3) de l'emploi des premier et second compteurs de référence locaux lors de la satisfaction d'un seuil de niveau d'activité pour les un ou plusieurs fils.
